# EUROPÄISCHE PATENTSCHRIFT

(11) **EP 3 045 731 B1**
(45) Veröffentlichungstag und Bekanntmachung des Hinweises auf die Patenterteilung: **12.06.2019**
(21) Anmeldenummer: 15195600.0
(22) Anmeldetag: 20.11.2015
(51) Int. Cl.: F04D 23/00

(54) **GEBLÄSE ZUR FÖRDERUNG VON WASSERSTOFF IN EINEM BRENNSTOFFZELLENSYSTEM EINES KRAFTFAHRZEUGS**
BLOWER FOR CONVEYING HYDROGEN IN A FUEL CELL SYSTEM OF A MOTOR VEHICLE
VENTILATEUR DESTINE A TRANSPORTER DE L'HYDROGENE DANS UN SYSTEME DE PILE A COMBUSTIBLE D'UN VEHICULE AUTOMOBILE

(30) Priorität: 16.01.2015 DE 102015000264
(43) Veröffentlichungstag der Anmeldung: 20.07.2016
(73) Patentinhaber: Pierburg GmbH, 41460 Neuss (DE)
(72) Erfinder: Burger, Andreas, 47803 Krefeld (DE); Benra, Michael-Thomas, 44579 Castrop-Rauxel (DE); Nigrin, Sven, 40468 Düsseldorf (DE); Nowak, Martin, 51379 Leverkusen (DE)
(74) Vertreter: Patentanwälte ter Smitten Eberlein-Van Hoof Rütten Partnerschaftsgesellschaft mbB

(56) Entgegenhaltungen:
- EP-A1- 0 011 983
- DE-A1- 2 223 762
- DE-A1- 10 314 820
- DE-A1-102007 053 162

## Beschreibung

Die Erfindung betrifft ein Gebläse zur Förderung von Wasserstoff in einem Brennstoffzellensystem eines Kraftfahrzeugs mit einem Strömungsgehäuse, welches einen Strömungsgehäusedeckel aufweist, einem Einlass und einem Auslass, welche am Strömungsgehäuse ausgebildet sind, einem den Einlass mit dem Auslass fluidisch verbindenden, im Strömungsgehäuse angeordneten Förderkanal, einem im Strömungsgehäuse drehbar gelagerten Laufrad und einer Antriebswelle, auf der das Laufrad angeordnet ist.

Derartige Gebläse werden zumeist als Seitenkanalgebläse ausgebildet. Sie dienen zur Zirkulation von Wasserstoff mit einem zumeist hohen Wasseranteil in den Anodengaskreisläufen von Brennstoffzellensystemen in Kraftfahrzeugen. Diese Brennstoffzellensysteme dienen zur Umwandlung von chemischer Reaktionsenergie eines kontinuierlich zugeführten Brennstoffes, insbesondere Wasserstoff und eines Oxidationsmittels, zumeist Sauerstoff, in elektrische Energie, die beispielsweise als Antriebsenergie für Fahrzeuge verwendet werden kann. Der Antrieb dieser Gebläse erfolgt üblicherweise über Elektromotoren, die beim Betrieb in Fahrzeugen über die Fahrzeugbatterie mit Spannung versorgt werden.

Im abgeschalteten Zustand der Brennstoffzellensysteme setzt sich bei niedrigen Umgebungstemperaturen der Wasseranteil an den Verrohrungen des Systems aber auch an den rotierenden Teilen des Gebläses wie Lager, Welle oder Laufrad ab. Bei einem Neustart des Brennstoffzellensystems kann dies bei zu großer Elsbrückenbildung zu einem Blockieren des Motors Zur Lösung dieses Problems wurde zunächst vorgeschlagen, mittels eines trockenen Spülgases das Wasser aus dem System auszutreiben. Ein solches Verfahren wird beispielsweise in der DE 103 14 820 A1 beschrieben.

Um zu verhindern, dass zusätzliche Spülgase transportiert werden müssen, was insbesondere bei mobilen Anwendungen zu einem unerwünschten zusätzlichen Aufwand führt, sind verschiedene Verfahren bekannt geworden, mit denen eine solche Eisbrückenbildung ohne die Verwendung zusätzlicher Spülgase verhindert oder aufgebrochen werden soll. Dabei ist zwischen Verfahren zu unterscheiden, bei denen vor dem Start des Systems die Eisbildung aufgehoben werden soll und solchen Verfahren, die entsprechende Prozeduren beim Abschalten des Systems durchführen.

Alternativ ist es zur Vermeidung eines erhöhten verfahrenstechnischen Aufwands bekannt, die Eisbrückenbildung durch entsprechende konstruktive Anpassungen zu verhindern.

So wird in der DE 10 2009 053 499 A1 ein Brennstoffzellensystem mit einem Anodengaskreislauf beschrieben, bei dem am Gebläse ein integrierter Flüssigkeitsabscheider angeordnet ist, der über eine Leitung entleert werden kann. Es wird jedoch nicht offenbart wie dieser Abscheider konkret am Gebläse ausgeführt werden kann.

Eine konkrete Ausbildung eines Anodengaszirkulationsgebläses in Form eines Seitenkanalgebläses zur Verhinderung einer Eisbrückenbildung ist aus der EP 2 168 193 B1 bekannt. Aus dem Unterbecherbereich zwischen dem Einlass und dem Auslass des Gebläses führt ein Kanal in Richtung einer im Gehäusedeckel ausgebildeten Ausnehmung. Zentral ist in dieser Ausnehmung eine Ablassöffnung ausgebildet, über die das Wasser aus dem Gehäuse des Gebläses abgeführt werden kann. So wird zwar eine Eisbrückenbildung zwischen der zum Deckel gewandten Seite des Laufrades und dem Deckel verhindert, jedoch nicht an der gegenüberliegenden Seite des Laufrades, an der sich weiterhin Wasser absetzen kann. Des Weiteren sind zusätzliche Leitungen zum Abführen des Wassers erforderlich.

Des Weiteren offenbart die DE 103 14 820 A1 ein Seitenkanalgebläse für ein Brennstoffzellensystem mit einem Laufrad, in dessen Laufrad eine Bohrung ausgebildet ist, durch die Wasser von der oberen Laufradfläche mittels eines Spülgases weggespült wird. Die nach unten weisende Laufradoberfläche ist jedoch im Bereich der Nabe direkt gegenüberliegend zum Gehäusedeckel angeordnet, so dass ohne vorherige Spülung eine Eisbrückenbildung einen Kaltstart bei Minustemperaturen verhindert.

Die DE 2 223 762 A1 offenbart einen motorisch angetriebenen Verdichter mit einem Deckel, welcher zwar trichterförmig geneigt ausgebildet ist, jedoch im Bereich der Schaufeln direkt am Deckel anliegt. Ebenso ist befindet sich die gegenüberliegende Laufradoberfläche direkt gegenüberliegend zum Gehäuse an, so dass dieses Gebläse ungeeignet für den Einsatz in einem Brennstoffzellensystem ist.

Es ist daher Aufgabe der Erfindung, ein Gebläse zur Förderung von Wasserstoff in einem Brennstoffzellensystem eines Kraftfahrzeugs zur Verfügung zu stellen, mit dem ein Festfrieren des Laufrades des Gebläses beidseitig vermieden werden kann, ohne dass weitere Bauteile benötigt werden oder ein erhöhter montagetechnischer Aufwand entsteht. Insbesondere sollen Rohrleitungen im Vergleich zu bekannten Ausführungen entfallen. Entsprechend soll eine Förderung des Wasserstoffs ohne Aufwärmzeit unmittelbar nach Start des Brennstoffzellensystems ermöglicht werden.

Diese Aufgabe wird durch ein Gebläse zur Förderung von Wasserstoff in einem Brennstoffzellensystem eines Kraftfahrzeugs mit den Merkmalen des Hauptanspruchs 1 gelöst.

Dadurch, dass der Strömungsgehäusedeckel geodätisch unterhalb des Laufrades angeordnet Ist und eine zum Laufrad gewandte Deckeloberfläche des Strömungsgehäusedeckels geschlossen ausgebildet ist, wobei ein Zwischenraum zwischen der Deckeloberfläche und einer zur Deckeloberfläche weisenden ersten Laufradoberfläche ausgebildet ist, wird ein Wasserreservoir geschaffen, in welchem sich das Wasser aus dem gesamten Strömungsgehäuse sammeln kann, ohne dass eine Berührung zu sich drehenden Teilen auftritt. Entsprechend kann das Gebläse beim Anlaufen des Brennstoffzellensystems sofort gestartet werden. Das Wasser muss hierzu nicht über zusätzliche Leitungen abgeführt werden.

Des Weiteren weist das Laufrad eine geneigte, von der Deckeloberfläche abgewandte zweite Laufradoberfläche auf, wobei die geneigte zweite Laufradoberfläche über zumindest eine Durchgangsöffnung mit dem Zwischenraum fluidisch verbunden ist. Somit kann das Wasser, welches sich nach dem Abschalten des Brennstoffzellensystems auf der Oberseite des Laufrades beziehungsweise zwischen dem Laufrad und dem am Deckel befestigten zweiten Strömungsgehäuseteil befindet, über die geneigte Oberfläche zur Durchgangsöffnung und von dort durch die Durchgangsöffnung zum Zwischenraum, also in das Wasserreservoir strömen, so dass auch eine Eisbrückenbildung zwischen der Oberseite des Laufrades und dem Gehäuse zuverlässig vermieden wird.

In einer hierzu weiterführenden Ausführungsform ist die zumindest eine Durchgangsöffnung an einer geodätisch tiefsten Position der geneigten zweiten Laufradoberfläche ausgebildet, wodurch sichergestellt wird, dass das an der Oberseite vorhandene Wasser möglichst vollständig in den Zwischenraum strömen kann.

Besonders vorteilhaft ist es, wenn drei gleichmäßig über den Umfang verteilte Durchgangsöffnungen am Laufrad ausgebildet sind, so dass unabhängig von einer vorhandenen Neigung des Fahrzeugs ein Großteil des Wassers in den das Wasserreservoir bildenden Zwischenraum strömt.

Vorzugsweise ist die geneigte zweite Laufradoberfläche im Wesentlichen bis an eine zentrale Laufradnabe trichterförmig ausgebildet, wobei der Übergang der trichterförmigen Oberfläche zur Laufradnabe die geodätisch tiefste Position der zweiten Laufradoberfläche bildet. Entsprechend wirkt die Laufradoberfläche als Wassersammler, an dessen tiefster Stelle die Öffnungen ausgebildet sind, so dass das Wasser von der Oberfläche abfließt.

Des Weiteren ist vorteilhafterweise die Deckeloberfläche zumindest abschnittsweise trichterförmig ausgebildet, wobei das radial Innere der Deckeloberfläche geodätisch an der tiefsten Position angeordnet ist. Entsprechend sammelt sich das Wasser zentral unterhalb des Wellenendes der Antriebswelle.

In einer besonders vorteilhaften Ausführung ist ein geodätisch vollständig unterhalb des Laufrades gebildetes Volumen des Zwischenraumes größer als das Volumen einer zu erwartenden Wassermenge im Strömungsgehäuse nach dem Abschalten des Brennstoffzellensystems. Eine derartige zu erwartende Wassermenge kann vom Fachmann berechnet werden. Durch die entsprechende Wahl der Größe des Volumens des Zwischenraumes wird sichergestellt, dass keine Berührung des Wassers zum Laufrad stattfindet und somit keine Eisbrückenbildung zu den drehenden Teilen entstehen kann.

In einer weiteren vorteilhaften Ausgestaltung der Erfindung wächst der Abstand zwischen einer zur Deckeloberfläche gewandten Laufradoberfläche und der Deckeloberfläche von radial außen nach radial innen wächst und unterhalb der Laufradnabe die Deckeloberfläche eben ausgebildet ist. Bei leichter Neigung eines Fahrzeugs wird so unterhalb des Laufrades für ein gleichbleibendes Volumen des Wassers Raum zur Verfügung gestellt, ohne dass eine Berührung des Wassers zum Laufrad auftritt.

Um in einem möglichst kleinen Raum möglichst viel Wasser speichern zu können und gleichzeitig eine Berührung des Laufrades mit diesem Wasser zu vermeiden, entspricht die Neigung der zur Deckeloberfläche gewandten Laufradoberfläche einer maximal zu erwartenden Neigung des Strömungsgehäuses, welche bei entsprechender geneigter Position des Kraftfahrzeugs auftritt.

Zusätzlich sollte die Neigung der Deckeloberfläche größer sein als die maximal zu erwartende Neigung des Strömungsgehäuses, wodurch ein Ausströmen des Wassers nach radial außen verhindert wird.
Des Weiteren ist es vorteilhaft, wenn das vollständig unterhalb des Laufrades im Zwischenraum ausgebildete Volumen zur Aufnahme des Wassers bei einer maximal zu erwartenden Neigung des Strömungsgehäuses im Wesentlichen dem im Zwischenraum ausgebildeten Volumen unterhalb des Laufrades bei nicht geneigtem Strömungsgehäuse entspricht. Auch dies sorgt für einen möglichst kleinen Bauraum trotz des zu verwendenden Speicherplatzes für das Wasser und verhindert so eine Eisbrückenbildung auch bei einer geneigten Parkposition des Kraftfahrzeugs.

Besonders bevorzugt ist es, das Gebläse als Seitenkanalgebläse auszubilden, in dem die geneigten Oberflächen im radial inneren der Laufradschaufeln angeordnet sind. Im Bereich der Seitenkanäle ist genug Speicherplatz vorhanden, so dass die Eisbrückenbildung beim Seitenkanalgebläse üblicherweise zwischen dem Deckel und der nah anliegenden geschlossenen Laufradfläche zu befürchten ist, was durch diese Anordnung verhindert wird.

Es wird somit ein Gebläse zur Förderung von Wasserstoff in einem Brennstoffzellensystem eines Kraftfahrzeugs geschaffen, mit welchem ohne zusätzliche Bauteile oder Leitungen verwenden zu müssen, eine Eisbrückenbildung zwischen dem Laufrad und dem Deckel des Gehäuses zuverlässig vermieden wird. Hierzu wird ein minimaler notwendiger Bauraum verwendet. Diese Funktion wird auch bei auftretender Neigung des Kraftfahrzeugs aufrecht erhalten, so dass ein Neustart des Systems ohne Verzögerung ermöglicht wird.

Ein Ausführungsbeispiel eines erfindungsgemäßen Gebläses zur Förderung von Wasserstoff in einem Brennstoffzellensystem eines Kraftfahrzeugs wird anhand der Figuren im Folgenden beschrieben.
Figur 1 zeigt einen Ausschnitt einer Seitenansicht eines erfindungsgemäßen Gebläses in geschnittener Darstellung.

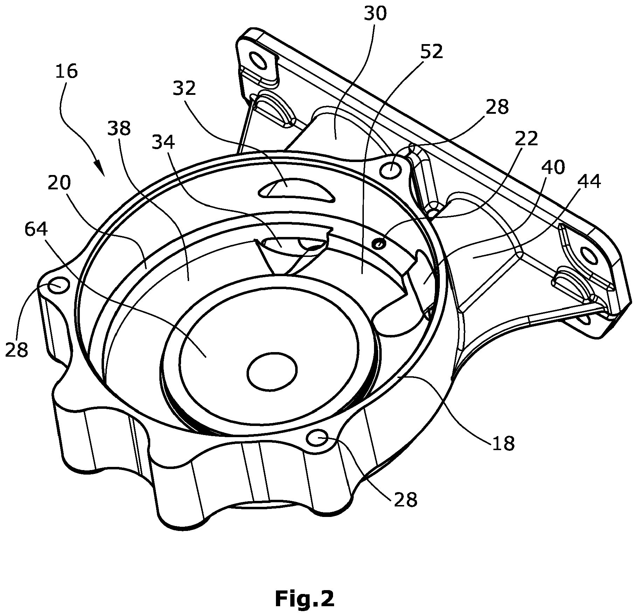

Figur 2 zeigt eine perspektivische Innenansicht des Strömungsgehäusedeckels des erfindungsgemäßen Gebläses aus Figur 1.
Figur 3 zeigt eine perspektivische Darstellung des Laufrades des erfindungsgemäßen Gebläses aus Figur 1.

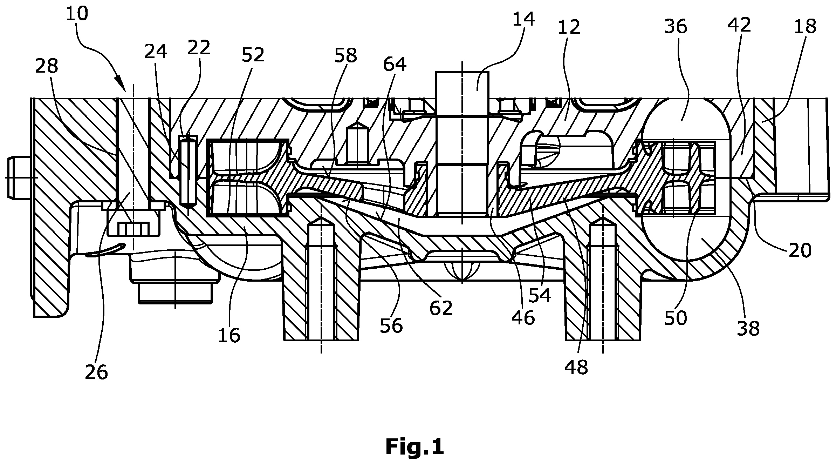

Das in der Figur 1 dargestellte Gebläse für die Rezirkulation von Wasserstoff im Anodengaskreislauf eines Brennstoffzellensystems besteht aus einem zweiteiligen Strömungsgehäuse 10, welches sich aus einem Lagergehäuse 12, in dem eine Antriebswelle 14 des Gebläses gelagert ist, und einem Strömungsgehäusedeckel 16 zusammensetzt. Der Strömungsgehäusedeckel 16 weist an seinem zum Lagergehäuse 12 weisenden axialen Ende im radial äußeren Bereich einen ringförmigen Vorsprung 18 auf, der das zum Strömungsgehäusedeckel 16 weisende axiale Ende des Lagergehäuses 12 umgreift. Im an den ringförmigen Vorsprung 18 radial innen angrenzenden Bereich weist der Strömungsgehäusedeckel 16 eine Anlagefläche 20 für das Lagergehäuse 12 auf, in der ebenso wie an der korrespondierenden Anlagefläche des Lagergehäuses zumindest eine Bohrung 22 ausgebildet ist, in dem ein Stift 24 angeordnet sind, über den eine Vorfixierung des Strömungsgehäusedeckels 16 zum Lagergehäuse 12 stattfindet, so dass eine Drehposition der beiden Strömungsgehäuseteile 12, 16 zueinander festgelegt ist. Die Befestigung des Strömungsgehäusedeckels 16 am Lagergehäuse 12 erfolgt über mehrere axiale Schrauben 26 im Bereich des ringförmigen Vorsprungs 18.

Am Strömungsgehäusedeckel 16 sind an der zum Lagergehäuse abgewandten Seite zusätzlich mehrere Sackbohrungen 28 mit Gewinde ausgebildet, über die die Befestigung des Gebläses am Kraftfahrzeug erfolgt. Diese Befestigung erfolgt immer derart, dass im waagerechten Zustand des Kraftfahrzeugs, in dem das Brennstoffzellensystem angeordnet ist, die Achse der Antriebswelle 14 ebenfalls senkrecht ausgebildet ist und der Strömungsgehäusedeckel 16 geodätisch unterhalb des Lagergehäuses 12 angeordnet ist.

Am Strömungsgehäusedeckel 16 ist ein Einlass 30 ausgebildet, der über zwei Einlassöffnungen 32, 34 mit zwei Förderkanälen 36, 38 fluidisch verbunden ist. Der erste dieser Förderkanäle 36 ist ein Seitenkanal der im Lagergehäuse 12 ausgebildet ist, der zweite ist ein Seitenkanal 38, der im Strömungsgehäusedeckel 16 ausgebildet ist. Beide Förderkanäle 36, 38 erstrecken sich in bekannter Weise über einen Großteil des Umfangs des Strömungsgehäuses 10 bis zu einer Auslassöffnung 40 erstreckt, die sowohl im ringförmigen Vorsprung 18 des Strömungsgehäusedeckels 16 als auch in der daran radial anliegenden Begrenzungswand 42 des Lagergehäuses 12 ausgebildet ist. Entsprechend ist die zweite Einlassöffnung 34, die in den Seitenkanal 38 des Strömungsgehäusedeckels 16 mündet im ringförmigen Vorsprung 18 ausgebildet, während die erste Einlassöffnung 32 sowohl den ringförmigen Vorsprung 18 als auch die Begrenzungswand 42 des Lagergehäuses 12 durchdringt. Ein von der Auslassöffnung 40 weiterführender Auslass 44 ist im Strömungsgehäusedeckel 16 ausgeführt.

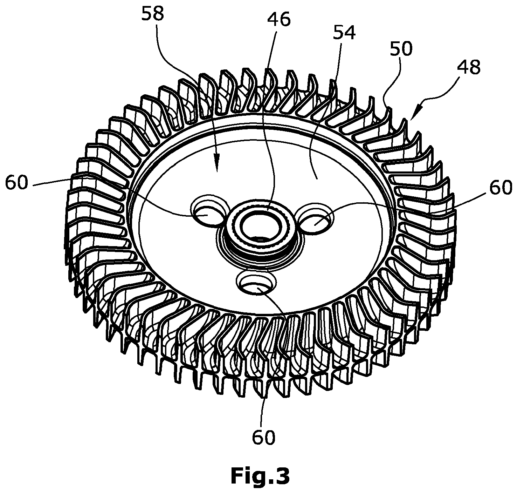

Auf dem Ende der Antriebswelle 14 ist eine Nabe 46 eines Laufrades 48 des Gebläses befestigt, welches in der Figur 3 dargestellt ist. Das Laufrad 48 ist zwischen dem Lagergehäuse 12 und dem Strömungsgehäusedeckel 16 und weist an seinem radial äußeren Bereich Laufradschaufeln 50 auf, die in bekannter Weise mit den beiden im eingebauten Zustand axial gegenüberliegenden Förderkanälen 36, 38 zusammenwirken, so dass sich bei Drehung des Laufrades 48 eine schraubenförmige Durchströmung der Schaufelzwischenräume und des gegenüberliegenden Förderkanals 36, 38 zwischen dem Einlass 30 und dem Auslass 44 ergibt. Diese Strömung wird durch einen Unterbrecherbereich 52 unterbrochen, in dem die zum Laufrad 48 weisenden Wände unmittelbar benachbart zum Laufrad 48 ausgebildet werden, wodurch der Strömungswiderstand so erhöht wird, dass das geförderte Fluid nicht weiter über die Förderkanäle 36, 38 strömen kann, sondern über den Auslass 44 das Strömungsgehäuse 10 verlässt.

Die radial außenliegenden Laufradschaufeln 50 sind mit der Laufradnabe 46 über eine Laufradscheibe 54 mit einer ersten Laufradoberfläche 56, die zum Strömungsgehäusedeckel 16 weist und einer zweiten Laufradoberfläche 58, die zum Lagergehäuse 12 weist, verbunden.

Erfindungsgemäß ist die zweite Laufradoberfläche 58 mit einer Neigung in Richtung der Laufradnabe 46 ausgebildet, so dass auf der zweiten Laufradoberfläche 58 vorhandenes Wasser aufgrund der Schwerkraft in Richtung der Laufradnabe 46 strömt, welche geodätisch tiefer angeordnet ist als die Laufradschaufeln 50, wodurch die erfindungsgemäße Neigung der Laufradoberfläche 58 erreicht wird. Die Laufradoberfläche 58 weist somit eine Trichterform auf, so dass das Wasser sich im radial Inneren sammelt.

In diesem an die Laufradnabe 46 angrenzenden Bereich sind gleichmäßig über den Umfang des Laufrades 48 verteilt drei Durchgangsöffnungen 60 ausgebildet, die das Laufrad 48 axial von der zweiten Laufradoberfläche 58 zur ersten Laufradoberfläche 56 durchdringen. Daraus folgt, dass das auf der zweiten Laufradoberfläche 58 gesammelte Wasser durch die Durchgangsöffnungen 60 in einen Zwischenraum 62 zwischen der ersten Laufradoberfläche 56 und einer zum Laufrad gewandten Deckeloberfläche 64 strömt.

Diese axial unterhalb der Scheibe 54 des Laufrades 48 ausgebildete Deckeloberfläche 64 ist ebenfalls allseitig zur Mitte hin geneigt, also trichterförmig ausgebildet, wobei die Neigung größer ist als die Neigung der ersten Laufradoberfläche 56, so dass sich der axiale Abstand zwischen der Laufradoberfläche 56 und der Deckeloberfläche 64 in Richtung zur Drehachse bis zur Laufradnabe 46 wächst. Unterhalb der Laufradnabe 46 an ihrer geodätisch tiefsten Stelle ist die Deckeloberfläche 64 eben ausgebildet, also erstreckt sich im Wesentlichen senkrecht zu einem Gravitationskraftvektor.

Aufgrund dieser Anordnung und Ausformung sammelt sich sowohl das Wasser von der zweiten Laufradoberfläche als auch das Wasser von der ersten Laufradoberfläche, welches auf die Deckeloberfläche tropft, als auch das im äußeren Bereich der Deckeloberfläche nach dem Abstellen der Brennstoffzelle und des Gebläses vorhandene Wasser im radial inneren Bereich des Zwischenraumes 62, der somit als Wasserreservoir dient. Der Abstand der Deckeloberfläche 64 zur ersten Laufradoberfläche 56 beziehungsweise der Antriebswelle 14 und der Laufradnabe 46 zur ebenen Fläche der Deckeloberfläche 64 wird dabei so gewählt, dass das Volumen zwischen der mit Wasser bedeckten Deckeloberfläche und dem Wasserspiegel sich immer unterhalb der sich drehenden Teile, also der Antriebswelle und des Laufrades 48 befindet.

Hierzu wird die maximale zu erwartende Wassermenge berechnet, die sich in einem Anodengaskreislauf nach dem Abschalten des Brennstoffzellensystems durch Kondensation des üblicherweise im Anodengaskreislauf vorhandenen Wasserdampfes im Gebläse einstellen und bei Temperaturen unter dem Gefrierpunkt dort gefrieren kann. Dieses berechnete Volumen wird entsprechend im Zwischenraum zur Verfügung gestellt.

Zu beachten ist zusätzlich, dass ein parkendes Kraftfahrzeug gegebenenfalls am Hang abgestellt wird, also zu einer Richtung geneigt geparkt wird, wodurch auch die Achse des Gebläses gekippt wird. Dies hat zur Folge, dass die Wasseroberfläche des im Zwischenraum 62 gesammelten Wassers nicht mehr parallel zur ebenen Fläche unterhalb der Laufradnabe 46 angeordnet ist, sondern geneigt dazu. Entsprechend wird die Neigung der Deckeloberfläche 64 sowie der Abstand der Laufradoberfläche 56 zur Deckeloberfläche 64 derart angepasst, dass auch bei einer vorgegebenen maximalen Neigung zum Gravitationskraftvektor das für das Wasser zur Verfügung stehende Volumen dem Volumen des maximal auskondensierenden Wassers entspricht, ohne das sich drehende Teile berührt werden. Hierzu ist es erforderlich, dass die Neigung der Deckeloberfläche zumindest geringfügig größer als die zu erwartende Fahrzeugneigung ist und der Abstand zwischen der ersten Laufradoberfläche und der Deckeloberfläche in Richtung der Mitte steigt.

Es wird somit ein Gebläse zur Förderung von Wasserstoff in einem Brennstoffzellensystem eines Kraftfahrzeuges geschaffen, bei dem das nach dem Abschalten der Brennstoffzelle im Gebläse auskondensierende Wasser vollständig im Strömungsgehäusedeckel aufgefangen und gesammelt wird und zwar ohne dass die Welle oder das Laufrad als drehende Teile vom Wasser berührt werden. So wird eine Eisbrückenbildung bei niedrigen Temperaturen zwischen feststehenden und sich drehenden Teilen im Gebläse verhindert. Bei Neustart des Brennstoffzellensystems kann das Gebläse entsprechend, ohne eine Klemmkraft überwinden zu müssen normal gestartet werden. Das im Gebläse gesammelte Wasser wird im Folgenden wieder verdampfen beziehungsweise aus dem Gebläse transportiert.

Es sollte deutlich sein, dass der Schutzbereich des Hauptanspruchs nicht auf das beschriebene Ausführungsbeispiel begrenzt ist. Derartige Gebläse lassen sich vorteilhaft überall dort einsetzen, wo mit Problemen aufgrund von Eisbrückenbildung zu rechnen ist, als beispielswiese auch beim Transport feuchter Luft. Des Weiteren können die Neigungswinkel und Formen der das Wasserreservoir bildenden Teile geändert werden, ohne den Schutzbereich des Hauptanspruchs zu verlassen. Weitere konstruktive Modifikationen sind ebenfalls denkbar.

## Patentansprüche

1. Gebläse zur Förderung von Wasserstoff in einem Brennstoffzellensystem eines Kraftfahrzeugs,
mit einem Strömungsgehäuse (10), welches einen Strömungsgehäusedeckel (16) aufweist,
einem Einlass (30) und einem Auslass (44), welche am Strömungsgehäuse (10) ausgebildet sind
einem den Einlass (30) mit dem Auslass (44) fluidisch verbindenden, im Strömungsgehäuse (10) angeordneten Förderkanal (36, 38), einem im Strömungsgehäuse (10) drehbar gelagerten Laufrad (48) und
einer Antriebswelle (14), auf der das Laufrad (48) angeordnet ist, und wobei der Strömungsgehäusedeckel (16) geodätisch unterhalb des Laufrades (48) angeordnet ist und eine zum Laufrad (48) gewandte Deckeloberfläche (64) des Strömungsgehäusedeckels (16) geschlossen ausgebildet ist, wobei ein Zwischenraum (62) zwischen der Deckeloberfläche (64) und einer zur Deckeloberfläche (64) weisenden ersten Laufradoberfläche (56) ausgebildet ist,
**dadurch gekennzeichnet, dass**
das Laufrad (48) eine geneigte, von der Deckeloberfläche (64) abgewandte zweite Laufradoberfläche (58) aufweist, wobei die geneigte zweite Laufradoberfläche (58) über zumindest eine Durchgangsöffnung (60) mit dem Zwischenraum (62) fluidisch verbunden ist.

2. Gebläse zur Förderung von Wasserstoff in einem Brennstoffzellensystem eines Kraftfahrzeugs nach Anspruch 1, **dadurch gekennzeichnet, dass**
die zumindest eine Durchgangsöffnung (60) an einer geodätisch tiefsten Position der geneigten zweiten Laufradoberfläche (58) ausgebildet ist.

3. Gebläse zur Förderung von Wasserstoff in einem Brennstoffzellensystem eines Kraftfahrzeugs nach einem der Ansprüche 1 oder 2,
**dadurch gekennzeichnet, dass**
drei gleichmäßig über den Umfang verteilte Durchgangsöffnungen (60) am Laufrad (48) ausgebildet sind.

4. Gebläse zur Förderung von Wasserstoff in einem Brennstoffzellensystem eines Kraftfahrzeugs nach einem der vorhergehenden Ansprüche,
**dadurch gekennzeichnet, dass**
die geneigte zweite Laufradoberfläche (58) im Wesentlichen bis an eine zentrale Laufradnabe (46) trichterförmig ausgebildet ist, wobei der Übergang der trichterförmigen Oberfläche zur Laufradnabe (46) die geodätisch tiefste Position der zweiten Laufradoberfläche (58) bildet.

5. Gebläse zur Förderung von Wasserstoff in einem Brennstoffzellensystem eines Kraftfahrzeugs nach einem der vorhergehenden Ansprüche,
**dadurch gekennzeichnet, dass**
die Deckeloberfläche (64) zumindest abschnittsweise trichterförmig ausgebildet ist, wobei das radial Innere der Deckeloberfläche (64) geodätisch an der tiefsten Position angeordnet ist.

6. Gebläse zur Förderung von Wasserstoff in einem Brennstoffzellensystem eines Kraftfahrzeugs nach einem der Ansprüche 4 oder 5,
**dadurch gekennzeichnet, dass**
der Abstand zwischen einer zur Deckeloberfläche (64) gewandten ersten Laufradoberfläche (56) und der Deckeloberfläche (64) von radial außen nach radial innen wächst und unterhalb der Laufradnabe (46) die Deckeloberfläche (64) eben ausgebildet ist.

7. Gebläse zur Förderung von Wasserstoff in einem Brennstoffzellensystem eines Kraftfahrzeugs nach einem der vorhergehenden Ansprüche,
**dadurch gekennzeichnet, dass**
das Gebläse ein Seitenkanalgebläse ist, in dem die geneigten Oberflächen im radial inneren der Laufradschaufeln (50) angeordnet sind.

## Claims

1. Blower for conveying hydrogen in a fuel cell system of a motor vehicle, comprising
a flow housing (10) having a flow housing cover (16),
an inlet (30) and an outlet (44) formed at the flow housing (10),
a feed channel (36, 38) arranged in the flow housing (10) and fluidically connecting the inlet (30) with the outlet (44),
an impeller (48) rotatably supported in the flow housing (10), and
a drive shaft (14) on which the impeller (48) is arranged,
and wherein the flow housing lid (16) is arranged geodetically below the impeller (48), and a cover surface (64) of the flow housing cover (16), which faces to the impeller (48), is closed, wherein a gap (62) is formed between the cover surface (64) and a first impeller surface (56) directed to the cover surface (64),
**characterized in that**
the impeller (48) has an inclined second impeller surface (58) averted from the cover surface (64), wherein the inclined second impeller surface (58) is in fluid communication with the gap (62) via at least one passage opening (60).

2. Blower for conveying hydrogen in a fuel cell system of a motor vehicle of claim 1, **characterized in that** the at least one passage opening (60) is formed at a geodetically lowest position of the inclined second impeller surface (58).

3. Blower for conveying hydrogen in a fuel cell system of a motor vehicle of one of claims 1 or 2, **characterized in that** three passage openings (60) are formed at the impeller (48), said openings being equally distributed over the circumference.

4. Blower for conveying hydrogen in a fuel cell system of a motor vehicle of one of the preceding claims, **characterized in that** the inclined second impeller surface (58) is formed funnel-shaped substantially up to a central impeller hub (46), the transition from the funnel-shaped surface to the impeller hub (46) forming the geodetically lowest position of the second impeller surface (58).

5. Blower for conveying hydrogen in a fuel cell system of a motor vehicle of one of the preceding claims, **characterized in that** the cover surface (64) is formed in a funnel-shape at least in sections, wherein the radial inside of the cover surface (64) is arranged geodetically at the lowest position.

6. Blower for conveying hydrogen in a fuel cell system of a motor vehicle of one of claims 4 or 5, **characterized in that** the distance between a first impeller surface (56) facing to the cover surface (64) and the cover surface (64) increases from radially outside to radially inside and the cover surface (64) is formed to be planar below the impeller hub (46).

7. Blower for conveying hydrogen in a fuel cell system of a motor vehicle of one of the preceding claims, **characterized in that** the blower is a side-channel blower in which the inclined surfaces are arranged radially inside of the impeller blades (50).

## Revendications

1. Ventilateur destiné à transporter de l'hydrogène dans un système de pile à combustible d'un véhicule automobile, avec
un boitier d'écoulement (10) comportant un couvercle (16) du boitier d'écoulement,
une entrée (30) et une sortie (44) formées sur le boitier d'écoulement (10), un canal de transport disposé dans ledit boitier d'écoulement (10) et mettant l'entrée (30) en communication fluidique avec la sortie (44),
une roue à aubes (48) supportée de manière rotative dans ledit boitier d'écoulement (10), et
un arbre d'entrainement (14) sur lequel ladite roue à aubes (48) est disposée,
et dans lequel ledit couvercle (16) du boitier d'écoulement est disposé géodésiquement en dessous de la roue à aubes (48), et une face (64) du couvercle dudit boitier d'écoulement (10), tournée vers ladite roue à aubes (48), est réalisée de manière fermée, un interstice (62) étant formé entre la face (64) du couvercle et une première face (56) de la roue à aubes tournée vers la face (64) du couvercle,
**caractérisé en ce que**
la roue à aubes (48) présente une deuxième face (58) de la roue à aubes, inclinée et détournée de la face (64) du couvercle, ladite deuxième face (58) de la roue à aubes inclinée étant en communication fluidique avec l'interstice (62) à travers au moins une ouverture de passage (60).

2. Ventilateur destiné à transporter de l'hydrogène dans un système de pile à combustible d'un véhicule automobile selon la revendication 1, **caractérisé en ce que** ladite au moins une ouverture de passage (60) est formée à la position géodésiquement la plus basse de la deuxième face (58) de la roue à aubes inclinée.

3. Ventilateur destiné à transporter de l'hydrogène dans un système de pile à combustible d'un véhicule automobile selon l'une quelconque des revendications 1 ou 2, **caractérisé en ce que** trois ouvertures de passage (60) sont formées dans la roue à aubes (48), reparties de manière équidistante sur la circonférence.

4. Ventilateur destiné à transporter de l'hydrogène dans un système de pile à combustible d'un véhicule automobile selon l'une quelconque des revendications précédentes, **caractérisé en ce que** la deuxième face (58) de la roue à aubes inclinée est réalisée en forme d'entonnoir essentiellement jusqu'au moyeu (46) central de la roue à aubes, le passage de la face en forme d'entonnoir au moyeu (46) de la roue à aubes formant la position géodésiquement la plus basse de la deuxième face (58) de la roue à aubes.

5. Ventilateur destiné à transporter de l'hydrogène dans un système de pile à combustible d'un véhicule automobile selon l'une quelconque des revendications précédentes, **caractérisé en ce que** la face (64) du couvercle est réalisée en forme d'entonnoir, au moins dans des sections, l'intérieur radial de la face (64) du couvercle étant disposé à la position géodésiquement la plus basse.

6. Ventilateur destiné à transporter de l'hydrogène dans un système de pile à combustible d'un véhicule automobile selon l'une quelconque des revendications 4 ou 5, **caractérisé en ce que** la distance entre une première face (56) de la roue à aubes tournée vers la face (64) du couvercle et la face (64) du couvercle augmente de l'extérieur radial vers l'intérieur radial, et que la face (64) du couvercle est plane en dessous du moyeu (46) de la roue à aubes.

7. Ventilateur destiné à transporter de l'hydrogène dans un système de pile à combustible d'un véhicule automobile selon l'une quelconque des revendications précédentes, **caractérisé en ce que** le ventilateur est un ventilateur à canaux latérales dans lequel les faces inclinées sont disposées à l'intérieur radial des aubes (50) de la roue.
